# FASCICULE DE BREVET EUROPEEN

(11) **EP 2 644 376 B1**
(45) Date de publication et mention de la délivrance du brevet: **04.03.2015**
(21) Numéro de dépôt: 12161347.5
(22) Date de dépôt: 26.03.2012
(51) Int. Cl.: B32B 37/18, B42D 15/00

(54) **Carte incorporant un objet de valeur visible et son procédé de fabrication**
Karte mit eingebautem sichtbaren Wertgegenstand und Verfahren zu deren Herstellung
Card including a visible object of value and method for the production thereof

(43) Date de publication de la demande: 02.10.2013
(73) Titulaire: Nagravision S.A., 1033 Cheseaux-sur-Lausanne (CH)
(72) Inventeur: Droz, François, 2035 Corcelles (CH)
(74) Mandataire: Surmely, Gérard

(56) Documents cités:
- GB-A- 2 218 044
- JP-A- 5 064 861
- JP-A- 8 108 669
- US-A- 6 006 456

## Description

### Domaine technique

La présente invention concerne une carte incorporant un objet de valeur visible. La carte définit un support pour cet objet de valeur. En particulier, l'objet de valeur est un petit lingot de métal précieux ou une pièce de valeur. Par pièce de valeur, on n'entend pas seulement une pièce dont la matière a un prix relativement élevé, mais aussi par exemple une pièce commémorative, une médaille ou une ou plusieurs pierre(s).

La carte, notamment au format bancaire et avec une épaisseur éventuellement supérieure à la norme ISO pour cartes bancaires, sert par exemple de support publicitaire ou simplement de support pour un objet de valeur remis à un client, un employé, un sportif, un gagnant d'un jeu, etc.

### Arrière-plan technologique

Il est connu d'associer un petit lingot d'or de 1 à 10 grammes dans une cavité effectuée dans le corps d'une carte plastique. Une carte de ce type est décrite dans le document US-A-6006456.

Dans une première variante, le corps de carte comprend une ouverture traversante dont le profil est sensiblement ajusté à celui du lingot. Dans une autre variante, l'ouverture traversante présente des dimensions supérieures à celles du lingot. Deux feuilles plastiques transparentes sont laminées respectivement sur les deux faces du corps de carte ajouré. Le lingot est ainsi enfermé entre les deux feuilles plastiques. Pour maintenir ce lingot dans une position sensiblement centrale de l'ouverture, il est prévu un bourrelet ou renflement formant un cadre sur l'une ou les deux feuilles plastiques. Ce cadre est par exemple obtenu par thermoformage. Il peut aussi être rapporté sur une ou chaque feuille plastique. Ce cadre entoure le lingot de manière que ce dernier reste sensiblement dans une position centrale de l'ouverture. En particulier, les deux feuilles plastiques sont soudées ensemble le long du cadre de manière à définir une pochette fermée pour le lingot. Ainsi on obtient autour du lingot une zone périphérique transparente. Toutefois, le cadre épais à l'intérieur de l'ouverture est visible et inesthétique. Bien que transparent, ce cadre engendre une déformation visuelle et empêche de bien voir la surface latérale du lingot. De plus, les deux feuilles plastiques sont aisément déformables dans la région de l'ouverture à la périphérie du cadre transparent. Dans cette région, comme dans la pochette où se trouve le lingot, de l'air est généralement emprisonné entre les deux feuilles plastiques. La carte n'est donc pas compacte et le lingot peut être manipulé de manière à sortir du plan du corps de carte. Ceci a pour conséquence que la carte est facilement endommagée et que sa longévité est limitée.

### Résumé de l'invention

La présente invention a pour but de fournir une carte incorporant un objet de valeur, en particulier un petit lingot de métal précieux ou une pièce de valeur, qui soit de haute qualité et qui présente cet objet de valeur de manière parfaitement visible sous tous ses côtés, c'est-à-dire dans l'entier de sa forme tridimensionnelle.

A cet effet, la présente invention a pour objet une carte formant un support pour un objet de valeur incorporé dans cette carte et comprenant un noyau ou un corps de carte avec une ouverture traversante dans laquelle est agencé cet objet de valeur, cette ouverture traversante présentant des dimensions supérieures à celles définies par le contour de cet objet de valeur dans le plan géométrique principal de cette carte. Cette carte comprend également au moins deux films transparents agencés respectivement des deux côtés du noyau ou corps de carte et recouvrant respectivement d'un côté et de l'autre l'objet de valeur, cet objet de valeur étant situé dans une zone centrale de l'ouverture traversante de manière qu'une zone périphérique transparente l'entoure à l'intérieur de cette ouverture traversante. Cette carte est caractérisée par le fait que l'objet de valeur est noyé dans une résine transparente qui remplit entièrement la zone périphérique à cet objet de valeur entre le pourtour de l'ouverture traversante et l'objet de valeur de manière que l'espace restant dans cette ouverture autour de cet objet de valeur est entièrement rempli par la résine.

La présente invention a aussi pour objet un procédé de fabrication d'au moins une carte, formant un support pour un objet de valeur incorporé dans cette carte, qui comprend les étapes suivantes :
A) Apport d'un noyau ou corps de carte sous forme de feuille plastique présentant au moins une ouverture traversante;
B) Apport d'au moins un objet de valeur respectivement dans ladite au moins une ouverture traversante, chaque objet de valeur ayant des dimensions inférieures à l'ouverture correspondante et étant placé dans cette ouverture de manière à laisser une zone périphérique visible autour de lui qui permette de voir tous les côtés de cet objet de valeur, chaque objet de valeur étant maintenu dans une zone centrale de l'ouverture correspondante par des moyens de fixation permanents ou temporaires ou par des moyens de positionnement permanents ou temporaires;
C) Apport d'une résine transparente dans chaque ouverture de manière à remplir l'espace restant autour de l'objet de valeur placé dedans;
D) Agencement d'un premier film et d'un deuxième film au moins partiellement transparents respectivement des deux côtés du noyau ou corps de carte, ces deux films recouvrant la résine transparente et chaque objet de valeur.

D'autres caractéristiques particulières de l'invention seront exposées ci-après dans la description détaillée de l'invention.

### Brève description des dessins

L'invention sera décrite ci-après à l'aide de dessins annexés, donnés à titre d'exemples nullement limitatifs, dans lesquels :
- La Figure 1 est une vue en perspective d'une carte selon l'invention qui incorpore un petit lingot de métal précieux dans une fenêtre de plus grandes dimensions;
- La Figure 2 est une vue partielle en coupe d'une carte selon l'invention obtenue par le premier ou le deuxième mode de mise en oeuvre d'un procédé de fabrication selon l'invention;
- Les Figures 3a à 3d représentent diverses étapes d'un premier mode de mise en oeuvre d'un procédé de fabrication selon l'invention d'une carte formant un support pour un objet de valeur; et
- Les Figures 4a à 4e représentent diverses étapes d'un deuxième mode de mise en oeuvre d'un procédé de fabrication selon l'invention d'une carte formant un support pour un objet de valeur.

### Description détaillée de l'invention

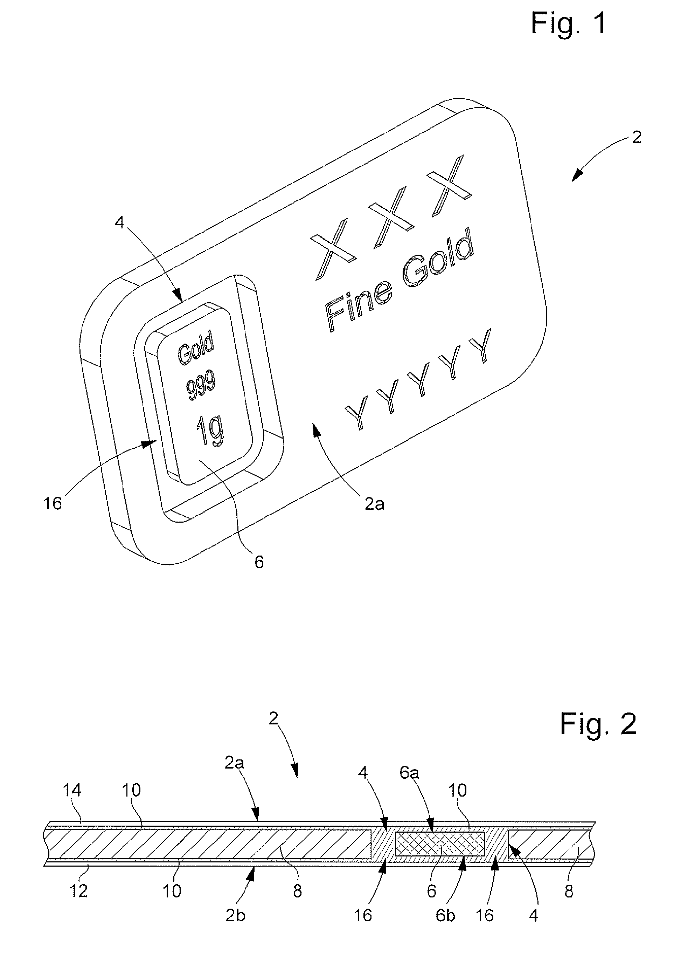

Une carte 2 selon l'invention, formant un support pour un objet de valeur 6 incorporé dans cette carte, sera décrite ci-après à l'aide des Figures 1 et 2. Dans la variante représentée aux Figures, l'objet de valeur est un petit lingot d'or qui définit un objet plat avec une face supérieure 6a et une face inférieure 6b. La carte 2 comprend un noyau ou corps de carte 8 avec une ouverture traversante 4 dans laquelle est agencé le petit lingot d'or. L'ouverture traversante présente des dimensions supérieures à celles définies par le contour du lingot dans le plan géométrique principal de cette carte qui est parallèle à sa face supérieure 2a et à sa face inférieure 2b.

La carte comprend également au moins deux films transparents 12 et 14 agencés respectivement des deux côtés du noyau ou corps de carte 8. Ces deux films recouvrent respectivement les faces inférieure et supérieure du lingot 6. Ce lingot est situé dans une zone centrale de l'ouverture traversante 4 et il est prévu une zone périphérique transparente 16 entourant le lingot à l'intérieur de l'ouverture traversante. Cette zone périphérique transparente est homogène et présente notamment une largeur sensiblement égale ou supérieure à un millimètre (1 mm). Elle définit une fenêtre dans la carte 2 permettant de voir au travers de cette carte dans la région périphérique 16. On remarquera que le lingot d'or donne ainsi l'impression de flotter dans l'air au milieu de l'ouverture du corps de carte. Il est donc aisé de voir le lingot d'or de tous ses côtés. L'objet de valeur peut donc être bien perçu dans ses trois dimensions, c'est-à-dire que l'oeil peut apprécier facilement son volume.

Selon l'invention, le lingot d'or est noyé dans une résine transparente 10 qui remplit entièrement la zone périphérique 16 à ce lingot d'or. Par résine on comprend notamment une colle. La zone périphérique s'étend entre le contour externe du lingot et le pourtour de l'ouverture traversante, en d'autres termes entre la surface latérale du lingot et la paroi de l'ouverture traversante 4. Il résulte de cette caractéristique que l'espace restant dans cette ouverture traversante autour du lingot est entièrement rempli par la résine. On notera que le lingot peut être constitué de n'importe quel métal précieux. Dans d'autres variantes, l'objet de valeur est une pièce plate, une petite médaille, une petite oeuvre d'art, une pierre, etc.

Selon la variante préférée représentée à la Figure 2, la résine 10 recouvre également la face supérieure 6a et la face inférieure 6b du petit lingot en métal précieux. Ainsi ce lingot est entièrement recouvert par la résine qui forme une interface d'adhérence entre ce lingot et les deux films transparents externes 12 et 14. La résine remplit donc tout espace restant dans l'ouverture 4 et forme une masse rigide ou semi-rigide entre les deux films transparents qui présentent dans la région de l'ouverture traversante 4 chacun une surface plane dans la continuité de la face supérieure 2a, respectivement face inférieure 2b de la carte. La résine a de préférence une certaine capacité de déformation élastique. De plus, la résine 10 est également répandue sur les deux faces du noyau 8 et forme deux films d'adhérence respectivement entre ce noyau et les deux films transparents externes 12 et 14. La carte selon cette variante préférée a donc deux faces externes 2a et 2b entièrement planes et la carte ne présente pas de poche d'air ; elle est compacte et pleine.

De manière générale, l'invention concerne également un procédé de fabrication d'au moins une carte formant un support pour un objet de valeur incorporé dans cette carte, ce procédé comprenant les étapes suivantes :
A) Un noyau ou corps de carte 8 est apporté sous forme de feuille plastique présentant au moins une ouverture traversante 4;
B) Un objet de valeur 6 est apporté dans l'ouverture traversante 4, cet objet de valeur ayant des dimensions inférieures à cette ouverture, et il est placé dans cette ouverture de manière à laisser une zone périphérique 16 visible autour de lui ; ce qui permet de voir tous les côtés de cet objet de valeur dans la carte fabriquée comme exposé précédemment. L'objet de valeur, en particulier un petit lingot, est maintenu dans une zone centrale de l'ouverture traversante par des moyens de fixation permanents ou temporaires ou par des moyens de positionnement permanents ou temporaires ;
C) Une résine transparente est apportée au moins dans l'ouverture traversante de manière à remplir l'espace restant autour de l'objet de valeur placé dedans ; et
D) Un premier film et un deuxième film au moins partiellement transparents sont respectivement agencés des deux côtés du noyau ou corps de carte, ces deux films recouvrant la résine transparente et l'objet de valeur.

On remarquera que l'ensemble des éléments sont apportés dans l'installation de fabrication qui comprend au moins une table ou surface de travail. On notera que les étapes du procédé susmentionné peuvent comprendre des sous-étapes intervenant à des moments différents de la fabrication de la carte incorporant l'objet de valeur. Aussi les étapes ci-dessus ne sont pas nécessairement successives comme ceci ressortira notamment du deuxième mode de mise en oeuvre qui sera décrit par la suite. En particulier, la résine peut être apportée par partie en plusieurs fois. Les moyens de fixation permanents sont par exemple constitués par la résine prévue, laquelle peut être formée de diverses matières et colles spécifiques. Dans une variante non représentée, ces moyens de fixation peuvent comprendre des moyens de positionnement permanents de l'objet de valeur dans la zone centrale de l'ouverture. Par exemple il est prévu des bras fins faisant saillie du pourtour de l'ouverture en direction de la zone centrale, ces bras fins appartenant au noyau de la carte. Ils peuvent être réalisés lors du découpage de la fenêtre. On peut en prévoir deux verticaux et deux horizontaux qui partent respectivement du milieu des quatre côtés définis par le pourtour de l'ouverture. Les moyens de fixation temporaires peuvent être formés par une colle peu adhérente, une pâte en silicone, etc. Les moyens de positionnement temporaires peuvent être formés par un posage, des goupilles de travail ou par un bras de préhension de l'objet de valeur ayant servi à son apport et à son placement dans la zone centrale de l'ouverture, puis finalement à son maintien dans cette zone centrale jusqu'à ce qu'une partie de la résine apportée dans l'ouverture traversante soit au moins partiellement solidifiée. On notera que la résine peut être apportée dans l'ouverture antérieurement à l'apport de l'objet de valeur dans cette ouverture ou postérieurement à l'apport de cet objet de valeur et déposée dans la zone périphérique 16. L'homme du métier peut concevoir plusieurs variantes pour positionner et tenir l'objet de valeur dans la position voulue au cours de la fabrication de la carte, au moins jusqu'à ce qu'au moins une partie de la résine 10 apportée dans l'ouverture traversante ait durci suffisamment pour assurer elle-même le positionnement et le maintien de cet objet de valeur dans la zone centrale de cette ouverture traversante.

On remarquera que le procédé selon l'invention prévoit avantageusement une fabrication de plusieurs cartes en lot. Ainsi on apporte une feuille plastique d'une certaine épaisseur, sélectionnée notamment en fonction de l'épaisseur de l'objet de valeur prévu, et ayant une pluralité d'ouvertures traversantes dans lesquelles sont respectivement placés une pluralité d'objets de valeur. L'apport de résine est effectué simultanément pour l'ensemble des cartes fabriquées. Les films transparents externes sont aussi prévus sensiblement aux dimensions de la feuille plastique. Une étape de découpage terminal est prévu pour obtenir les cartes individuelles. On remarquera encore que la feuille plastique et/ou les films transparents peuvent comprendre diverses impressions et/ou éléments sécuritaires et/ou informations relatives à l'objet de valeur. En particulier, au moins un des films transparents est adapté à une impression au laser.

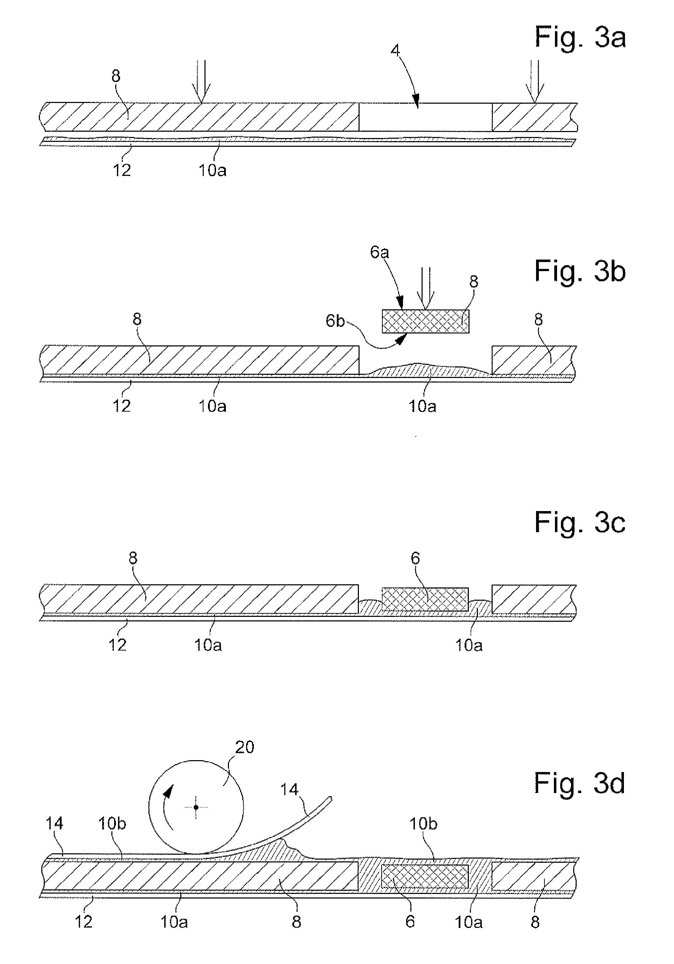

On décrira ci-après à l'aide des Figures 3a à 3d un premier mode de mise en oeuvre du procédé de fabrication de cartes formant chacune un support d'un objet de valeur. On décrira par la suite la fabrication d'une carte, mais le même procédé s'applique aisément à la fabrication en lot de plusieurs cartes, comme indiqué ci-avant.

Le film transparent 12 avec une première partie 10a de la résine sur sa face supérieure sont apportés dans une presse et on apporte dessus le noyau 8 présentant l'ouverture traversante 4. On peut évidemment apporter le noyau sur la résine avant d'apporter l'ensemble dans la presse pour effectuer l'assemblage. Dans une variante préférée, on utilise un rouleau presseur pour effectuer l'assemblage. Ceci permet d'éliminer la présence de bulles d'air entre le film transparent et le noyau. Alors que la première partie 10a de la résine est encore suffisamment liquide (état liquide visqueux) pour permettre une pénétration de celle-ci, on apporte le petit lingot 6, à l'aide d'un outil de préhension équipé par exemple d'un système d'aspiration permettant de tenir le lingot par vide d'air, et on le dépose dans la zone centrale de l'ouverture 4, de préférence en pressant sur la résine présente au fond de cette ouverture. Ensuite, on laisse ou on fait durcir la première partie de la résine pour assurer un maintien du lingot dans sa position initiale lors de l'étape ultérieure. Si nécessaire, l'outil de préhension continue de maintenir le lingot jusqu'à ce que la résine soit suffisamment rigide pour elle-même maintenir le lingot dans la position voulue. Lorsque la résine est une colle thermodurcissable, on peut prévoir un apport de chaleur pour accélérer la polymérisation de la colle durant cette phase. Dans une autre variante ou la résine solidifiée peut aisément être fondue à nouveau, la résine 10a est déjà quasi entièrement solidifiée lorsque le lingot est apporté. Ce lingot étant formé d'un métal précieux, il est prévu alors de le chauffer avant de l'apporter et de le faire pénétrer dans la résine 10a en fondant localement cette résine qui se déforme sous l'action d'une pression exercée sur le lingot. Dans une autre variante, on peut prévoir de fondre localement la résine 10a au fond de l'ouverture juste avant d'apporter le lingot et de le faire pénétrer partiellement dans cette résine.

Après que le lingot soit tenu de manière suffisamment rigide par la première partie de la résine solidifiée, une deuxième partie 10b de la résine est apportée sur la face supérieure du noyau 8 et dans l'ouverture 4, notamment sur le lingot. Cette résine est de préférence déposée sous forme de cordons parallèles présentant initialement entre eux des sillons propres à assurer une bonne évacuation de l'air résiduel. Le second film transparent 14 est ensuite appliqué dessus à l'aide d'un rouleau presseur 20. Après solidification de la deuxième partie de la résine, on obtient une carte 2 selon l'invention. La résine et les films transparents assurent une parfaite vision du lingot de tous ses côtés et une parfaite transparence dans la zone périphérique 16 à ce lingot. L'état de surface de la carte est de haute qualité, comparable aux standards pour une carte bancaire.

Selon des variantes du premier mode de mise en oeuvre, il est prévu soit de déposer la première partie de la colle directement sur une surface de travail non adhérente (par exemple en silicone ou téflon®), soit d'apporter une feuille de travail non adhérente (papier siliconé ou feuille PE) et de déposer la première partie de la résine dessus. De même, pour étendre et remplir l'espace restant dans l'ouverture 4, on peut utiliser une seconde feuille de travail. Une fois la résine 10a et 10b solidifiée, on obtient ainsi un produit intermédiaire. Pour terminer la carte, on enlève les deux feuilles de travail amovibles qui se détachent aisément de la résine, et on applique les deux films transparents de part et d'autre du produit intermédiaire. Pour ce faire, on peut utiliser une presse ou des rouleaux presseurs et on peut avantageusement prévoir d'apporter un film de colle thermocollante ou de la colle sous forme liquide pour assembler les films transparents au produit intermédiaire ; ceci permet d'augmenter la planéité de la carte. Dans une autre variante, on prévoit seulement une application par thermo-compression des films transparents externes contre les deux faces du produit intermédiaire.

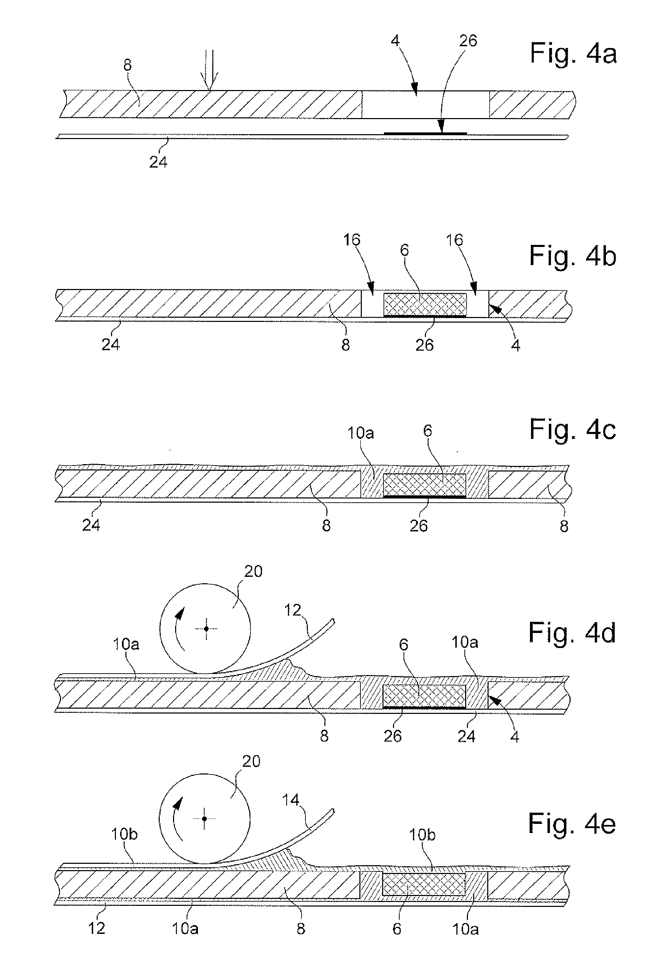

On décrira ci-après à l'aide des Figures 4a à 4e un deuxième mode de mise en ouvre du procédé de fabrication selon l'invention.

Une feuille de travail 24 est premièrement apportée sur une surface de travail et le noyau ou corps de carte 8 est placé dessus et maintenu dans une position stable relativement à cette feuille de travail. Une colle de faible adhérence 26, définissant un moyen de fixation temporaire du lingot à la feuille de travail, est prévue sur ladite feuille de travail au moins dans la région de la zone centrale de l'ouverture traversante 4. Dans une variante, cette colle peu adhérente est déposée sur la face inférieure du lingot qui est apporté ensuite dans cette ouverture traversante. On remarquera qu'en lieu et place de la colle peu adhérente, on peut prévoir par exemple une pâte ou un film souple adhérant légèrement au lingot ou épousant le relief de ce lingot de manière à le maintenir en place lors des étapes des Figures 4c et 4d. Ensuite, une première partie 10a de la résine est apportée au moins dans l'ouverture traversante. Dans une variante représentée à la Figure 4d, on apporte sur cette première partie de résine le film transparent 12 que l'on applique à l'aide d'une presse ou d'un rouleau 20. Suite à la solidification de cette première partie de résine 10a, l'assemblage obtenu est retourné et la feuille de travail 24 ainsi que la colle de faible adhérence 26 sont retirés. Finalement, comme montré à la Figure 4e, une seconde partie 10b de la résine est apportée au moins sur le lingot 6 et le film transparent 14 est apporté sur l'assemblage et appliquer à l'aide d'une presse ou d'un rouleau 20.

Dans ce deuxième mode de mise en oeuvre, plusieurs variantes sont possibles. Ainsi, dans une variante, en lieu et place du film transparent 12 dans l'étape de la Figure 4d, on utilise une seconde feuille de travail peu adhérente à la résine pour étendre uniformément cette résine et remplir l'espace restant dans l'ouverture 4. Dans une autre variante, l'étape de la Figure 4e peut également être réalisée à l'aide d'une feuille de travail peu adhérente. On obtient ainsi un produit intermédiaire avec deux faces sensiblement planes après retrait des feuilles de travail. L'application des deux films transparents externes des deux côtés du produit intermédiaire peut se faire alors ultérieurement, de la même manière que décrite dans le cadre du premier mode de mise en oeuvre. On remarquera qu'il est encore envisageable d'introduire dans, sous ou sur la résine prévue entre le noyau ou corps de carte et un film transparent externe un élément sécuritaire, par exemple un timbre officiel ou un hologramme.

## Revendications

1. Carte (2) formant un support pour un objet de valeur (6) incorporé dans cette carte et comprenant un noyau ou corps (8) avec une ouverture traversante (4) dans laquelle est agencé cet objet de valeur, cette ouverture traversante présentant des dimensions supérieures à celles définies par le contour de cet objet de valeur dans le plan géométrique principal de cette carte, ladite carte comprenant également au moins deux films transparents (12,14) agencés respectivement des deux côtés du noyau ou corps de cette carte et recouvrant respectivement d'un côté et de l'autre l'objet de valeur, cet objet de valeur étant situé dans une zone centrale de ladite ouverture traversante de manière qu'une zone périphérique transparente (16) entoure l'objet de valeur à l'intérieur de cette ouverture traversante, **caractérisée en ce que** ledit objet de valeur est noyé dans une résine transparente (10) qui remplit entièrement ladite zone périphérique à cet objet de valeur entre ce dernier et le pourtour de l'ouverture traversante, de manière que l'espace restant dans cette ouverture autour de cet objet de valeur est entièrement rempli par la résine.

2. Carte selon la revendication 1, **caractérisée en ce que** ledit objet de valeur est un petit lingot en métal précieux (6) ou une pièce de valeur, et **en ce que** ladite résine recouvre également la face supérieure (6a) et la face inférieure (6b) de ce petit lingot en métal précieux ou de cette pièce de valeur, cette résine formant ainsi une interface entre cet objet de valeur et les deux films transparents.

3. Carte selon la revendication 1 ou 2, **caractérisée en ce que** les deux films transparents présentent au moins dans la région de ladite ouverture traversante des surfaces externes entièrement planes.

4. Procédé de fabrication d'au moins une carte formant un support pour un objet de valeur (6) incorporé dans cette carte, comprenant les étapes suivantes :
A) Apport d'un noyau ou corps de carte (8) sous forme de feuille plastique présentant au moins une ouverture traversante (4);
B) Apport d'au moins un objet de valeur respectivement dans ladite au moins une ouverture traversante, chaque objet de valeur ayant des dimensions inférieures à l'ouverture correspondante et étant placé dans cette ouverture de manière à laisser une zone périphérique (16) visible autour de lui qui permette de voir tous les côtés de cet objet de valeur, chaque objet de valeur étant maintenu dans une zone centrale de l'ouverture correspondante par des moyens de fixation permanents ou temporaires ou par des moyens de positionnement permanents ou temporaires ;
C) Apport d'une résine transparente (10a, 10b) dans chaque ouverture de manière à remplir l'espace restant autour de l'objet de valeur placé dedans ;
D) Agencement d'un premier film (12) et d'un deuxième film (14) au moins partiellement transparents respectivement des deux côtés dudit noyau ou corps de carte, ces deux films recouvrant ladite résine transparente et chaque objet de valeur.

5. Procédé de fabrication selon la revendication 4, **caractérisé en ce qu'**une première partie (10a) de ladite résine est apportée premièrement sur une surface ou une feuille de travail à laquelle cette résine n'adhère pas ou sur ledit premier film ; ensuite ledit noyau ou corps de carte et ledit au moins un objet de valeur sont apportés sur cette première partie de ladite résine ; ensuite, après que ladite première partie de la résine soit au moins partiellement solidifiée, une seconde partie (10b) de ladite résine est apportée sur ledit noyau ou corps de carte et sur ledit objet de valeur ; et finalement ledit deuxième film est apporté sur la seconde partie de la résine et, si pas fourni avant l'apport de ladite première partie de la résine, ledit premier film est apporté sur cette première partie de la résine, ces premier et deuxième films étant appliqués avec une pression contre le noyau ou corps de carte.

6. Procédé de fabrication selon la revendication 5, **caractérisé en ce que** ledit noyau ou corps de carte et ladite feuille de travail ou ledit premier film sont assemblés par la première partie de ladite résine, avec une application de pression, avant l'apport dudit au moins un objet de valeur dans ladite au moins une ouverture traversante.

7. Procédé de fabrication selon la revendication 4, **caractérisé en ce qu'**une feuille de travail (24) est premièrement apportée et ledit noyau ou corps de carte est placé dessus et maintenu dans une position stable relativement à cette feuille de travail, un film de faible adhérence (26) définissant un moyen de fixation temporaire dudit au moins un objet de valeur à la feuille de travail étant prévu soit sur ladite feuille de travail au moins dans la région de ladite au moins une ouverture traversante, soit sur la face inférieure dudit au moins un objet de valeur qui est apporté ensuite respectivement dans cette au moins une ouverture traversante, **en ce qu'**ensuite une première partie (10a) de ladite résine est apportée au moins dans ladite au moins une ouverture traversante, et **en ce que**, suite à la solidification de cette première partie de résine, l'assemblage obtenu est retourné et ladite feuille de travail ainsi que ladite colle de faible adhérence sont retirés, et finalement une seconde partie (10b) de ladite résine est apportée au moins sur ledit au moins un objet de valeur.

8. Procédé de fabrication selon la revendication 7, **caractérisé en ce que** ledit premier film est apporté sur ladite première partie de résine et qu'il est appliqué à l'aide d'une presse ou d'un rouleau (20), et **en ce qu'**ensuite ledit deuxième film est apporté sur ladite seconde partie de résine et qu'il est appliqué à l'aide d'une presse ou d'un rouleau.

## Patentansprüche

1. Karte (2), die einen Träger für einen in diese Karte eingebauten Wertgegenstand (6) bildet und einen Kern oder Körper (8) mit einer durchgehenden Öffnung (4) umfasst, in der dieser Wertgegenstand angeordnet ist, wobei diese durchgehende Öffnung Abmessungen aufweist, die grösser sind als diejenigen, die vom Umriss dieses Wertgegenstandes in der geometrischen Hauptebene dieser Karte definiert sind, wobei diese Karte ebenfalls wenigstens zwei durchsichtige Filme (12, 14) umfasst, die jeweils beiderseits des Kerns oder Körpers dieser Karte angeordnet sind und den Wertgegenstand auf der einen bzw. der anderen Seite überdecken, wobei dieser Wertgegenstand in einer zentralen Zone der durchgehenden Öffnung angeordnet ist, sodass eine durchsichtige Umfangszone (16) den Wertgegenstand innerhalb dieser durchgehenden Öffnung umgibt, **dadurch gekennzeichnet, dass** der Wertgegenstand in einem durchsichtigen Harz (10) eingebettet ist, das die Umfangszone um diesen Wertgegenstand zwischen diesem Letzteren und dem Rand der durchgehenden Öffnung völlig ausfüllt, sodass der in dieser Öffnung um diesen Wertgegenstand verbleibende Raum völlig durch das Harz ausgefüllt ist.

2. Karte nach Anspruch 1, **dadurch gekennzeichnet, dass** der Wertgegenstand ein kleiner Edelmetallbarren (6) oder ein Wertstück ist und dass das Harz ebenfalls die Oberfläche (6a) und die Unterfläche (6b) dieses kleinen Edelmetallbarren oder dieses Wertstücks überdeckt, wobei dieses Harz somit eine Grenzfläche zwischen diesem Wertgegenstand und den beiden durchsichtigen Filmen bildet.

3. Karte nach Anspruch 1 oder 2, **dadurch gekennzeichnet, dass** die beiden durchsichtigen Filme wenigstens im Bereich der durchgehenden Öffnung völlig glatte Aussenflächen aufweisen.

4. Verfahren zum Herstellen wenigstens einer Karte, die einen Träger für einen in diese Karte eingebauten Wertgegenstand (6) bildet, welches Verfahren folgende Schritte umfasst:
A) Bereitstellen eines Kartenkerns oder -körpers (8) in Form einer Plastikfolie, die wenigstens eine durchgehende Öffnung (4) aufweist;
B) Einfügen wenigstens eines Wertgegenstandes jeweils in die wenigstens eine durchgehende Öffnung, wobei jeder Wertgegenstand Abmessungen aufweist, die kleiner sind als die entsprechende Öffnung, und wobei er in dieser Öffnung derart platziert wird, dass um ihn herum eine sichtbare Umfangszone (16) freigelassen wird, die ermöglicht, alle Seiten dieses Wertgegenstandes zu sehen, wobei jeder Wertgegenstand durch permanente oder temporäre Befestigungsmittel oder durch permanente oder temporäre Positionierungsmittel in einer zentralen Zone der entsprechenden Öffnung gehalten wird;
C) Beifügen eines durchsichtigen Harzes (10a, 10b) in jede Öffnung, um den verbleibenden Raum um den darin platzierten Wertgegenstand auszufüllen;
D) Anordnen eines ersten Films (12) und eines zweiten Films (14), die wenigstens teilweise durchsichtig sind, jeweils beiderseits des Kartenkerns oder -körpers, wobei diese beiden Filme das durchsichtige Harz und jeden Wertgegenstand überdecken.

5. Herstellungsverfahren nach Anspruch 4, **dadurch gekennzeichnet, dass** ein erster Teil (10a) des Harzes zuerst auf eine Oberfläche oder eine Arbeitsfolie, an der dieses Harz nicht haftet, oder auf den ersten Film aufgetragen wird; dann wird der Kartenkern oder -körper und der wenigstens eine Wertgegenstand auf diesen ersten Teil des Harzes aufgebracht; nachdem der erste Teil des Harzes wenigstens teilweise verfestigt ist, wird dann ein zweiter Teil (10b) dieses Harzes auf den Kartenkern oder -körper und auf den Wertgegenstand aufgebracht; und schliesslich wird der zweite Film auf den zweiten Teil des Harzes aufgetragen und der erste Film, falls er nicht vor dem Beifügen des ersten Teils des Harzes geliefert worden ist, wird auf diesen ersten Teil des Harzes aufgetragen, wobei dieser erste und dieser zweite Film mit einer Druckkraft gegen den Kartenkern oder -körper angebracht werden.

6. Herstellungsverfahren nach Anspruch 5, **dadurch gekennzeichnet, dass** der Kartenkern oder -körper und die Arbeitsfolie oder der erste Film vor dem Einfügen des wenigstens einen Wertgegenstandes in die wenigstens eine durchgehende Öffnung durch den ersten Teil des Harzes mit einer Druckeinwirkung aneinandergefügt werden.

7. Herstellungsverfahren nach Anspruch 4, **dadurch gekennzeichnet, dass** zuerst eine Arbeitsfolie (24) bereitgestellt wird und dass der Kartenkern oder -körper darauf platziert wird und in einer stabilen Position im Verhältnis zu dieser Arbeitsfolie gehalten wird, wobei ein Film mit schwachem Haftvermögen (26), der ein Mittel zum temporären Befestigen des wenigstens einen Wertgegenstandes an der Arbeitsfolie definiert, entweder auf der Arbeitsfolie wenigstens im Bereich der wenigstens einen durchgehenden Öffnung oder auf der Unterseite des wenigstens einen Wertgegenstandes vorgesehen ist, der dann jeweils in diese wenigstens eine durchgehende Öffnung eingefügt wird, dass dann ein erster Teil (10a) des Harzes wenigstens in die wenigstens eine durchgehende Öffnung beigefügt wird, und dass die erhaltene Fügung nach der Verfestigung dieses ersten Harzteils umgedreht wird und dass die Arbeitsfolie sowie der Kleber mit schwachem Haftvermögen entfernt werden, und schliesslich wird ein zweiter Teil (10b) des Harzes wenigstens auf den wenigstens einen Wertgegenstand aufgetragen.

8. Herstellungsverfahren nach Anspruch 7, **dadurch gekennzeichnet, dass** der erste Film auf den ersten Harzteil aufgetragen wird und dass er mit Hilfe einer Presse oder einer Rolle (20) angebracht wird, und dass dann der zweite Film auf den zweiten Harzteil aufgetragen wird und dass er mit Hilfe einer Presse oder einer Rolle angebracht wird.

## Claims

1. Card (2) forming a support for a valuable object (6) incorporated into said card and including a core or body (8) with a through aperture (4) in which said valuable object is arranged, said through aperture having larger dimensions than those defined by the contour of said valuable object in the main geometric plane of said card, said card further including at least two transparent films (12, 14) respectively arranged on the two sides of the core or body of said card and respectively covering one and the other side of the valuable object, said valuable object being located in a central area of said through aperture so that a transparent peripheral area (16) surrounds the valuable object inside said through aperture, **characterized in that** said valuable object is embedded in a transparent resin (10) which completely fills said area peripheral to said valuable object between said object and the contour of the through aperture, so that the space remaining in said aperture around said valuable object is completely filled by the resin.

2. Card according to claim 1, **characterized in that** said valuable object is a small precious metal ingot (6) or a valuable coin or piece, and **in that** said resin also covers the top surface (6a) and the bottom surface (6b) of said small precious metal ingot or said valuable coin or piece, said resin thus forming an interface between said valuable object and the two transparent films.

3. Card according to claim 1 or 2, **characterized in that**, at least in the area of said through aperture, the two transparent films have entirely flat external surfaces.

4. Method of manufacturing at least one card forming a support for a valuable object (6) incorporated in said card, comprising the following steps:
A) Taking a card body or core (8) in the form of a plastic sheet having at least one through aperture (4);
B) Placing at least one valuable object respectively in said at least one through aperture, each valuable object having smaller dimensions than the corresponding aperture and being placed in said aperture so as to leave a visible peripheral area (16) around said object which enables said object to be seen on all sides, each valuable object being held in a central area of the corresponding aperture by a permanent or temporary securing means or by a permanent or temporary positioning means;
C) Providing a transparent resin (10a, 10b) in each aperture so as to fill the space remaining around the valuable object placed therein;
D) Arranging an at least partially transparent first film (12) and second film (14) respectively on both sides of the card body or core, said two films covering the transparent resin and each valuable object.

5. Manufacturing method according to claim 4, **characterized in that** a first part (10a) of said resin is first of all placed on a work surface or a work sheet to which said resin does not adhere or on said first film; then said card body or core and said at least one valuable object are placed on said first part of said resin; then, after said first part of the resin has at least partially solidified, a second part (10b) of said resin is placed on said card body or core and on said valuable object; and finally said second film is placed on the second part of the resin, and, if not provided prior to the addition of said first part of the resin, said first film is placed on said first part of the resin, said first and second films being applied with pressure against the card body or core.

6. Manufacturing method according to claim 5, **characterized in that** said card body or core and said work sheet or said first film are assembled by the first part of said resin, with an application of pressure, prior to the addition of said at least one valuable object in said at least one through aperture.

7. Manufacturing method according to claim 4, **characterized in that** a work sheet (24) is first of all provided and said card body or core is placed on top thereof and held in a stable position relative to said work sheet, a low adherent film (26) forming a means of temporarily securing said at least one valuable object to the work sheet, being provided either on said work sheet at least in the area of said at least one through aperture, or on the bottom surface of said at least one valuable object, said valuable object being then respectively placed in said at least one through aperture, **in that** a first part (10a) of the resin is then placed at least in said at least one through aperture, and **in that**, after said first resin part has solidified, the assembly obtained is turned over and said work sheet and said low adherent adhesive are removed, and finally a second part (10b) of said resin is placed at least on said at least one valuable object.

8. Manufacturing method according to claim 7, **characterized in that** said first film is placed on said first resin part and is applied using a press or a roller (20), and **in that** then said second film is placed on said second resin part and is applied using a press or a roller.
